# EUROPEAN PATENT APPLICATION

(11) **EP 4 546 704 A1**
(43) Date of publication of application: **30.04.2025**
(21) Application number: 23205922.0
(22) Date of filing: 25.10.2023
(51) Int. Cl.: H04L 9/08, H04L 9/32

(54) **IMPROVED REDUNDANCY PROTECTION BY WAY OF CLONING STATEFUL PRIVATE KEYS SUITABLE FOR PROTECTING AGAINST QUANTUM COMPUTER ATTACKS USING AN HSM**

(71) Applicant: THALES DIS CPL USA, INC., Austin, TX 78759 (US)
(72) Inventor: PATCHELL, Jonathan, Ontario, K7C 2H4 (CA)
(74) Representative: Lotaut, Yacine Diaw

(57) **Abstract**

Provided is a method to improve the redundancy mechanisms associated with private key use and storage currently employed in HSMs that use Hash-Based Signature Schemes to protect against quantum computer attacks. The method includes generating (110) a unique partition ID, generating (120) an original private key (200), performing (130) a key split operation on the original private key (200), cloning (140) the secondary key (220) to a secondary partition, and controlling (150) an allowance and restriction of signing operations on the HSM. Other embodiments are disclosed.

## Description

### TECHNICAL FIELD

The present invention relates generally to cryptographic software and hardware, and more particularly, to Hardware Security Modules (HSM) using Stateful Hash-Based Signature Schemes and back-up of key material to provide protection against quantum computer attacks.

### BACKGROUND

Quantum computing is a rapidly-emerging field and technology that harnesses the laws of quantum mechanics to solve problems too complex for classical computers. It is a new approach to calculation that uses principles of quantum mechanics to solve extremely complex problems very fast; one of which is factoring large integers. Quantum computers are known to be a potential threat to current encryption systems and there is industry concern that they will be powerful enough to break standard public-key encryption. Due to the risk posed by quantum computers, many organizations are in the process of strategically migrating to post-quantum cryptographic algorithms.

Post-quantum cryptography (PQC) refers to cryptographic algorithms that are thought to be secure against a cryptanalytic attack by a quantum computer. By utilizing quantum-resistant algorithms, Hardware Security Modules (HSMs) can provide a layer of security that can protect against attacks from quantum computers. In 2022, the National Institute of Standards and Technology (NIST) selected four algorithms designed to withstand attack by quantum computers. Two of the three post-quantum methods for digital signatures selected thus far are based on a single mathematical idea called structured lattices.

NIST SP800-208 specifies two algorithms that can be used to generate a digital signature, both of which are stateful hash-based signature (HBSS) schemes: the Leighton-Micali Signature (LMS) system and the eXtended Merkle Signature Scheme (XMSS), along with their multi-tree variants, the Hierarchical Signature System (HSS) and multi-tree XMSS. This publication is available from: https:/Idoi.org/10.6028/NISTSP.800-208. Here however, HBSS subordinate keys are only distributed across multiple HSMs to provide redundancy, and their public keys are signed by a root HBSS key in a root HSM.

Another kind of public-key based signature scheme, hash-based signature, is believed to be resist to both classical and quantum computers. Hash-based signatures are designed by combining one-time signature (OTS) (Merkle 1979b; Naor et al. 2005) or few-time signature (FTS) (Perrig 2001; Reyzin and Reyzin 2002; Aumasson and Endignoux 2017, 2018; Bernstein et al. 2017, 2019) with a hash tree, and its security is based on the security assumptions of the underlying hash function, such as collision resistance, second preimage resistance, onewayness (Coron et al. 2005; Rogaway and Shrimpton 2004), etc., thereby avoiding the dependence on the hard number theoretic problems of other digital signature schemes.

Although researchers have developed and are standardizing encryption methods capable of dealing with cryptographic threats, it takes industry leaders, experts and developers significant time, cost and effort to assess particular risks, develop quantum resistant approaches, and ultimately implement and develop upon these new strategies, which may all differ in their various implementation forms, for example, to properly address architecture, hardware limitations, performance, memory usage, and algorithm design. Accordingly a need remains for improvement against quantum computer attacks and threats.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

One objective of the embodiments of the invention is to improve the redundancy mechanisms associated with private key use and storage currently employed in HSMs that use Hash-Based Signature Schemes.

In one embodiment, a secure method (100) is provided for improved redundancy protection by way of cloning stateful private keys suitable for use against quantum computer attacks directed to a Hardware Security Module (HSM) amongst a group of HSMs employing stateful Hash-Based Signature Schemes (HBSS). The method comprises the steps of generating (110) a unique partition ID for each partition of memory within the HSM for the group of HSMs, and generating (120) an original private key (200) and assigning to it: i) an original partition ID (201) corresponding to an original partition (Par1) of the memory associated with the unique partition ID (207) on which the original private key (200) is generated, and ii) a set of allowed original indexes (202) for accessing One-Time Signature (OTS) keys corresponding to a state of the original private key (200).

The method includes performing (130) a key split operation on the original private key (200) using a Target Partition ID as input to the operation, thereby producing and assigning: a primary key (210) specific to a primary partition ID (211) corresponding to the original partition ID (201), with its revised set of allowed primary indexes (212) for OTS keys selected from the set of allowed original indexes (202), and a secondary key (220) specific to a secondary partition ID (221) corresponding to the Target Partition ID, the secondary key (220) with its targeted set of allowed secondary indexes (222) for OTS keys selected from the set of allowed original indexes (202). The original private key is split only if its original partition ID (201) matches the original partition (Par1) of the memory on which it was generated.

The method includes cloning (140) the secondary key (220) to a secondary partition (Par2) of memory selected from one among the HSM or another HSM within the group of HSMs associated with the secondary partition ID (221), and
controlling (150) an allowance and restriction of signing operations on the HSM or other HSM for the primary key (210), the secondary key (220) and derivative keys thereof, in view of partition IDs and indexes embedded within such split keys to retrieve OTS keys. This ensures that a Key Partition ID matches a partition ID on which a respective key resides, and if so, consumes OTS keys only within a respective allowed index range for the respective key selected from an array of OTS keys in memory, thereby enforcing allowance of a signing use, or otherwise restricting said signing use, whereby improved redundancy protection is provided by way of cloning stateful private keys.

In some embodiments, the method further comprises performing additional key splits of the primary key (210), secondary key (220) or derivative keys thereof, only when their Key Partition ID matches a partition ID of the memory they reside in after said step of cloning, and tracking indexes within such keys of a respective partition for a lifecycle of the respective partition containing key produced from said key split operation.

In some embodiments, the key split operation performs a targeted indexing split of the original indexes (202) according to a parameter or algebraic equation, and an integer to determine the number of signatures to split off, provided as input, for producing primary indexes (212) and secondary indexes (213).

In some embodiments, the key split operation produces a targeted split with allowed indexing in the ranges of:
[i₀, i₁ - s] for primary indexes (212) selected from a first portion of ranges [i₀, i₁] of the allowed original indexes (202), and
[i₁ - s + 1, i₁] for secondary indexes (213) selected from a second portion of ranges [i₀, i₁] of the allowed original indexes (202), responsive to receiving an integer "s" parameter as input.

In some embodiments, only primary OTS keys within the set of allowed primary indexes (212) associated with primary key (210) and residing in the primary partition (Par1) corresponding to the primary partition ID (211) are allowed for HSM signing operations, and
only secondary OTS keys within the set of allowed secondary indexes (222) associated with secondary key (220) and residing in the secondary partition (Par2) corresponding to the secondary partition ID (221) are allowed for HSM signing operations.

In some embodiments, the step of performing (130) a key split operation further comprises recursively performing additional key splits on a generated key, and derivative keys thereof, on the HSM or another one of the HSMs, where a partition ID of the generated key is assigned during its generation to match a partition of memory to which it will be cloned on the HSM or another one of the HSMs.

In some embodiments, the method further comprises tracking indexes of keys used in a partition for a lifecycle of the partition, where the HSM enforces that each key will only permit use of indexes in a set of allowed indexes, wherein each key contains a unique identifier that associates the allowed indexes to each said key, such that, if a key is deleted and re-cloned to the partition, the HSM uses the key identifier to determine a state of the key, and wherein the state of the key describes a range for the set of allowed indexes, and an actual index they key is presently at. In some embodiments, the HBSS is one of an eXtended Merkle Signature Scheme (XMSS) and a Leighton-Micali Signatures (LMS) scheme.

In another embodiment, a Hardware Security Module (HSM) is provided employing stateful Hash-Based Signature Schemes (HBSS) with improved redundancy protection against quantum computer attacks. The HSM comprises one or more processors and memory coupled to the one or more processors, wherein the memory includes one or more partitions and computer instructions which when executed by the one or more processors causes the one or more processors to perform the operations of generating (110) a unique partition ID for each partition of memory within the HSM for the group of HSMs, and generating (120) an original private key (200) and assigning to it: i) an original partition ID (201) corresponding to an original partition (Par1) of the memory associated with the unique partition ID (207) on which the original private key (200) is generated, and
ii) a set of allowed original indexes (202) for accessing One-Time Signature (OTS) keys corresponding to a state of the original private key (200).

In some embodiments, the HSM performs (130) a key split operation on the original private key (200) using a Target Partition ID as input to the operation, thereby producing and assigning: a primary key (210) specific to a primary partition ID (211) corresponding to the original partition ID (201), with its revised set of allowed primary indexes (212) for OTS keys selected from the set of allowed original indexes (202), and
a secondary key (220) specific to a secondary partition ID (221) corresponding to the Target Partition ID, the secondary key (220) with its targeted set of allowed secondary indexes (222) for OTS keys selected from the set of allowed original indexes (202). The original private key is split only if its original partition ID (201) matches the original partition (Par1) of the memory on which it was generated.

In some embodiments, the HSM clones (140) the secondary key (220) to a secondary partition (Par2) of memory selected from one among the HSM or an other HSM within the group of HSMs associated with the secondary partition ID (221), and controls (150) an allowance and restriction of signing operations on the HSM or other HSM for the primary key (210), the secondary key (220) and derivative keys thereof, in view of partition IDs and indexes embedded within such split keys to retrieve OTS keys, by ensuring that a Key Partition ID matches a partition ID on which a respective key resides; and if so, consuming OTS keys only within a respective allowed index range for the respective key selected from an array of OTS keys in memory, thereby enforcing allowance of a signing use, or otherwise restricting said signing use, whereby improved redundancy protection is provided by way of cloning stateful private keys.

In some embodiments, the HSM comprises one or more processors partition (110) memory into one or more partitions, and assigning an original partition ID (207) to the one or more partitions.

In some embodiments, the one or more processors generate (120) an original private key (200) with a metadata structure comprising entries for: a key name, key partition ID (201), key bytes, index (203) of a current OTS key, and a set of allowed indexes (202) and storing the entries within the one or more partitions.

In some embodiments, the one or more processors split the original private key (200) using a Target Partition ID as input and an integer number of derivative keys to generate and split off from the original private key.

In some embodiments, the one or more processors recursively perform additional key splitting and the cloning of the derivative keys to target HSMs within the group of HSMs, and wherein the one or more processors perform a targeted indexing split of the original indexes (202) according to a parameter or algebraic equation, and an integer to determine the number of signatures to split off, provided as input, for producing primary indexes (212) and secondary indexes (213).

In some embodiments, the one or more processors track indexes of keys used in a partition for a lifecycle of the partition, where the HSM enforces that each key will only permit use of indexes in a set of allowed indexes, wherein each key contains a unique identifier that associates the allowed indexes to each said key, such that, if a key is deleted and re-cloned to the partition, the HSM uses the key identifier to determine a state of the key, and wherein the state of the key describes a range for the set of allowed indexes, and an actual index the key is presently at.

In some embodiments, the HSM controls (150) an allowance and restriction of signing operations to ensure that a given index or OTS key will only ever be used once to sign a message, in addition to never using an index or OTS key outside of its allowed range.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1** depicts a Hardware Security Module (HSM) employing stateful Hash-Based Signature Schemes (HBSS) configured for protection against quantum computer attacks in accordance with embodiments;
**FIG. 2A** depicts an initial depiction of a partition holding a private key responsive to key generating in accordance with embodiments;
**FIG. 2B** depicts a revised depiction of a memory partition holding stateful private keys responsive to key splitting in accordance with embodiments;
**FIG. 2C** depicts a revised depiction of memory partitions holding stateful private keys responsive to key cloning in accordance with embodiments;
**FIG. 3** depicts key signing and key verification by way of a private key in accordance with embodiments; and
**FIG. 4** depicts exemplary components of a Hardware Security Module (HSM) in accordance with one embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

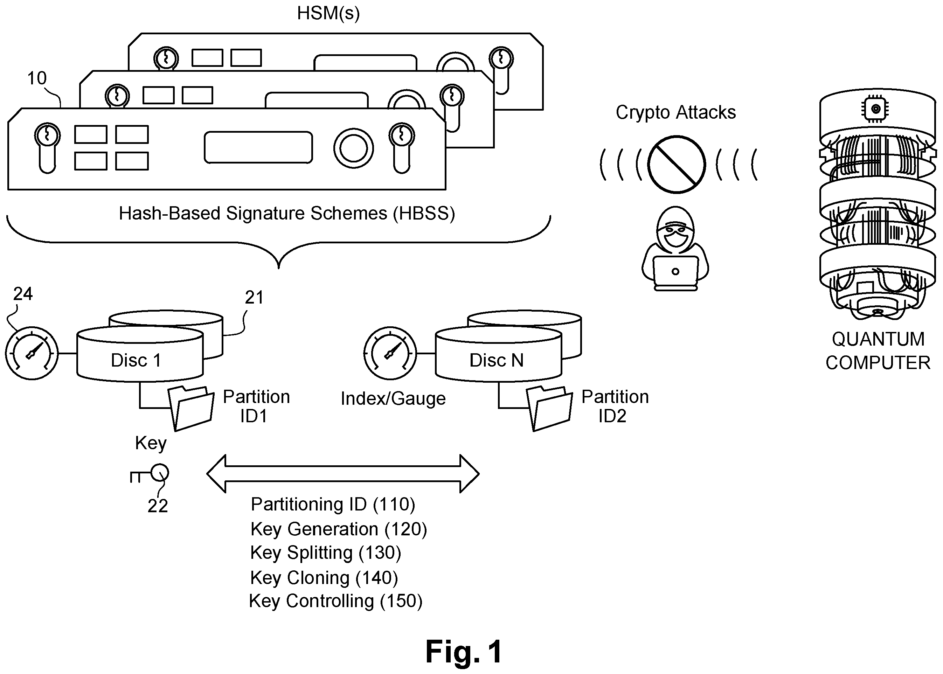

Referring to **FIG. 1** a Hardware Security Module (HSM) **10** amongst a group of HSMs employing stateful Hash-Based Signature Schemes (HBSS) configured for protection against quantum computer attacks is shown. The Hardware Security Module (HSM) is a dedicated crypto processing unit specifically designed for the hardware protection of the cryptographic key lifecycle. HSMs are fully contained and complete solutions for cryptographic processing, key generation, and key storage. They act as trust anchors to protect the crypto infrastructure of security-conscious organizations by securely managing, processing, and storing cryptographic keys inside a hardened, tamper-resistant device. HSM protect keys and are used by applications in on premise, virtual, and cloud environments. They are deployed and securely configured remotely in any of these environments.

The HSM **10** provides stateful Hash-Based Signature Schemes (HBSS) for data and message signing. Hash-based signatures provide a mechanism for signing that is considered resistant to attacks by quantum computers. Hash-based signature schemes include a Merkle tree where each leaf node is the hash of an OTS public key. Each non-leaf node is a hash of its two child nodes. The overall public key includes the root of the Merkle tree. For a tree of height h there are 2^{h} leaf nodes. When signing, the OTS private key is used to produce a one-time signature of the message and this is combined with an authentication path to produce the signature. The verifier uses the one-time signature and the message to arrive at the leaf node. Using the leaf node and the authentication path this leads to the root node which can be compared to the root value of the public key. HBS schemes are widely accepted as good candidates for quantum-secure signatures. Hash-Based Signature Schemes such as XMSS and LMS are believed to be secure against both Classical and Quantum Computer attacks. For stateful hash-based signature schemes, the signature key needs to be renewed when exceeding its service time, namely, the number of times it can be used to sign messages. In contrast, a stateless hash-based signature selects signature key pseudo randomly, and doesn't require the management of key state.

HSMs play an important role in digital signing, including HBSS, whether XMSS or LMS, by maintaining protection of cryptographic material, including keys and certificates. The HSM **10** applies a digital signature on the message to identity the sender and the authenticity of the message, which can be confirmed by the recipient and to prevent non-repudiation, where the sender of the message is unable to deny, or repudiate, the sending of that message. HSMs provide functionalities for key authorization that are suited for issuance of qualified certificates, resisting hacking attempts since they are constructed from specialized and secure hardware, and strengthening cryptographic encryption practices during keys' entire lifecycle from generation to disposal and in-between, among other uses.

In some arrangements, as shown here, a corresponding private key **22** of an associated key pair of a public key used in an HBSS context is stored within the HSM **10.** The public key is generally stored on a certificate that may be provided to, or stored on, the HSM. As one example, it can be stored in a partition of memory, for example, a non-volatile hard disc **21.** One issue with implementing HBSS is that the Private key **22** used for signing only consists of a finite number of One-Time Signature (OTS) Keys. That is, the number of available OTS keys is limited. In cryptosystems, an OTS key is a cryptographic key similar to a One-Time Pad, which is unbreakable providing certain conditions are met. Accordingly, the OTS key must only be used once in order to keep the scheme secure. And, in general practice, the private key is usually assigned a state which is an index into this array of OTS keys to enforce this.

But this approach presents problems when considering redundancy. Here, redundancy means having multiple copies of the same private key, for example, in a database, partition, or another HSM. Redundancy is a way to back up the keys to protect against failure or compromise. But this is challenging to implement and manage. It is difficult to maintain copies of the generic key material yet somehow still enforce that each OTS key is used only once, especially when copies of the key are distributed amongst one or more HSMs. Consider as an example, if the HSM generates a key and then makes a backup of that key for redundancy, and then proceeds to use that key to sign several messages, the state would be incrementing through those OTS keys, and then if the HSM restored the backup of that key onto another HSM with the previous state, both HSMs would essentially end up using those same OTS keys to sign messages. This would breach the security rule that an OTS key must only be used once. Thus, at that point, an attacker could then forge signatures. Accordingly, providing redundancy by way of the current approaches, such as a key store backup, suitable for use amongst one or more HSMs to protect against failure in its current form presents a challenge.

A solution is needed. Briefly, in the embodiments herein presented, the above challenge is overcome in part by implementing a series of methods that condition the private keys for specific partition use, such that, regardless of where they private keys are saved or copied to, the HSM enforces private key use for signing operations in a manner that prevents reuse of OTS keys. This ensures an OTS key is used only once in accordance with the security rule, whether other copies of that private key with corresponding OTS keys exist on the partition, or are distributed amongst multiple partitions or one or more HSMs.

The first part of the conditioning mechanism requires that a unique partition ID is generated for each partition of memory on the one or more HSMs. Thereafter, generated (original) keys are produced that only take the partition ID of the partition that key is generated on. The second part of the conditioning mechanism introduces a key splitting operation. In this, derivative keys (primary, secondary) are split off from the generated key taking as parameters a target partition ID and a number of desired OTS keys or indexes to split off (e.g. 2). This information is preserved in metadata associated with the stateful private keys. The key splitting revises a state of the private key **22**, and identifies a range for the set of allowed indexes, along with an actual index the key is presently at for the OTS Keys. These steps provide safeguarding of redundant key storage and use in key signing operations. Provided also is an index/gauge **24** to observe each partition as it tracks the index of its keys for the lifecycle of the partition by way of a unique identifier within each private key
**FIG. 1** depicts a Hardware Security Module (HSM) employing stateful Hash-Based Signature Schemes (HBSS) with improved redundancy protection against quantum computer attacks in accordance with embodiments. The first part of the conditioning mechanism generates **110** a unique partition ID (e.g., ID1, ID2) for each partition. The physical partition is labeled and identified using this partition ID. As one example, hard drive partitions on Linux systems rely on a UUID (universally unique identifier) for unique labels. In some environments, a command line tool or partition manager is used to generate UUIDs to set or change a partition's UUID.

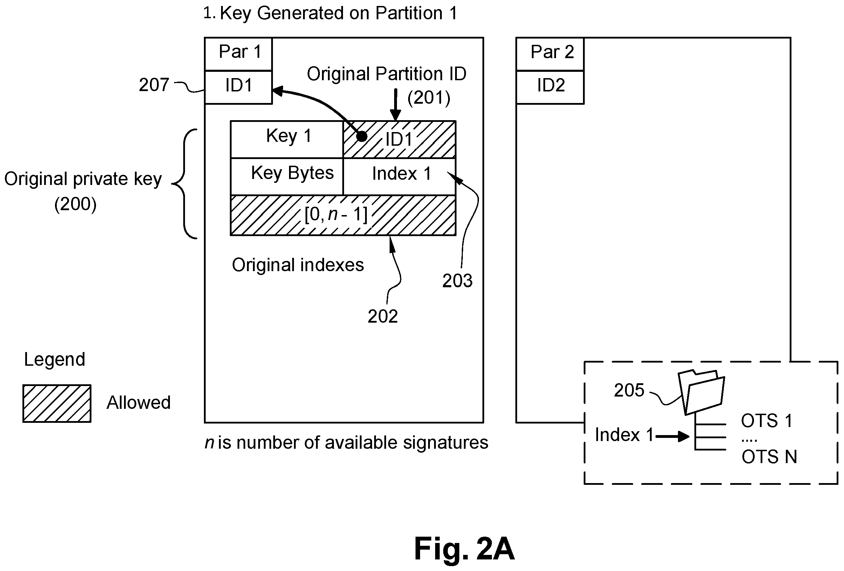

Next, an original private key **22** is generated on a partition **21** that has been assigned and labeled with a unique partition ID (e.g. ID1). Referring now to **FIG. 2A****,** an initial depiction of memory partitions for holding the private key is shown responsive to the step of key generation (120). The memory partitions Par1 and Par2 may reside in one or more HSMs. The partition identifier (see ID1 and ID2) **207** is associated with, and is unique to, each partition across the one or more HSMs. Here, as illustrated, a first partition (Par1) of memory holds the generated private key **200.** The partition ID (ID1) **207** of the partition and the metadata structure of the private key **200** provide the aspects of technical enablement for the first conditioning mechanism.

The generated private key **22** includes metadata that identifies the unique partition ID for the partition with which it is associated. In includes entries for a key name (Key1), key partition ID **201** (ID1), key bytes, index **203** (Index 1) of a current OTS key, and a set of allowed indexes **202.** Separately, within the same partition, or another partition, the set of OTS keys **205** is stored. As shown in this example, the Index 1 **203** identifies the current OTS key in the set of OTS keys **205** available for use. The metadata structure of the private key **200** is representative of other private keys stored with the HSM or other HSMs, and may include more entries than those shown. It is this creation and use of the metadata structure of the private key **200** along with the partition ID **207** that helps the HSM to control redundancy and enforce key control of the OTS keys across one or more HSMs, and which ultimately serves to prevent any use of an OTS key more than once regardless of whether copies of the OTS key **205** persist across one or more HSMs, or in multiple partitions.

Notably, a "generated" key takes the partition ID of the original partition it is generated on. Here forth, the term "original" will be textually applied to metadata elements of **FIG 2A**, to designate that the private key **200** either originated in this partition, or is considered original to this partition. The terms "primary" and "secondary" will also be seen ahead when referring to later derived, or split, stateful private keys. Recall, in the first step, the HSM generates and then assigns the partition ID **207** unique to the partition. The HSM then generates the original private key **200** on a partition (Par1) and assigns it an original partition ID **201** corresponding to the original partition ID of the partition (ID1) **207**, and the set of allowed original indexes **202** for accessing OTS keys **205.**

Accordingly, the original private key **200** comprises metadata; namely: key descriptor (Key1), original partition ID **201**, Key Bytes, Index **203**, and an original set of allowed indexes **202.** The original private key **200** has access to all OTS keys **205** with indexes in the range of 0 to N-1, where N is the number of available OTS keys for signing, as designated by the original set of allowed indexes **202.** Partition two (Par 2) is an empty partition at this stage.

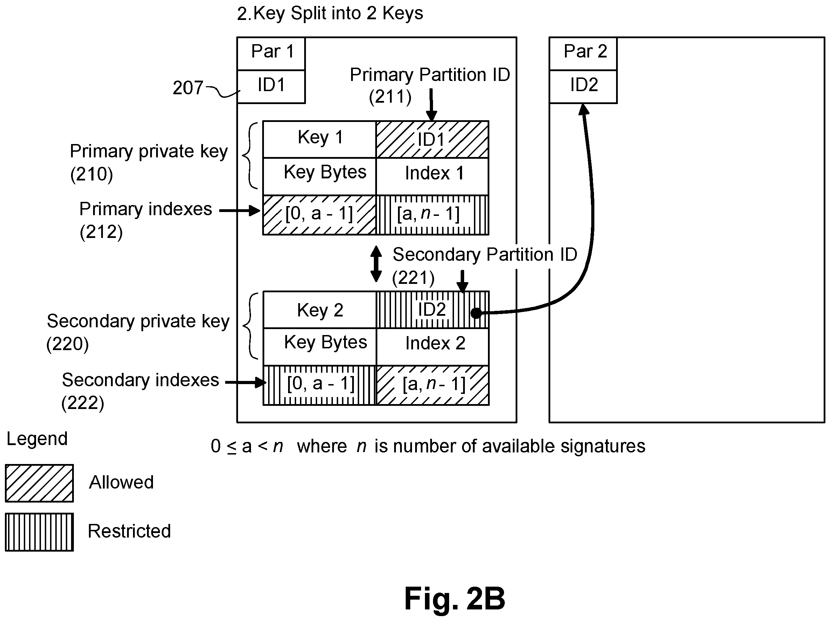

In the next step, the HSM performs (130) a key split operation on the original private key **200** using a Target Partition ID as input to the operation. Note, the original private key can only be split if its original partition ID **201** matches the original partition Par1 of the memory on which it was generated. For this example, it does. Referring to **FIG. 2B**, a revised depiction of memory partitions for holding stateful private keys associated with this key splitting step is shown. The terms "primary" and "secondary" are applied to the stateful private keys for reference since the resulting set of allowed indexes (**212**, **222**) differs as a result of key splitting. Here, the HSM produces and assigns: a primary key **210** specific to a primary partition ID **211** corresponding to the original partition ID **211**, with its revised set of allowed primary indexes **212** for OTS keys selected from the set of allowed original indexes **202**; and a secondary key **220** specific to a secondary partition ID **221** corresponding to the Target Partition ID, the secondary key **220** with its targeted set of allowed secondary indexes **222** for OTS keys selected from the set of allowed original indexes 202. The terms "primary and secondary" are associated with the metadata elements of **FIG 2B** for descriptive purposes only. Partition two (Par 2) is still empty partition at this stage.

In this step, the set of indexes is split (**212**, **222**), or partitioned, between the primary key **210** and the secondary key **220.** The split key operation takes parameter for the target partition ID as well as basically an integer to determine the number of derivative keys to split off and the new split key can then be cloned to the target partition. It should be understood that multiple splits are possible, for example, to produce a third or fourth private key with their own distinct index ranges. Private keys will only be able to use indexes in the allowed set and can only perform signatures if its partition ID matches the ID of the partition it resides on. And a key can only be split if it's partition ID matches the partition's ID. That is, a generated key will take the partition ID of the partition it is generated on, and keys will only be able to use indexes in the allowed set and can only perform signatures if it's partition ID matches the ID of the partition it resides on. Again, a key can only be split if it's partition ID matches the partition's ID.

As shown in **FIG. 2B**, partition Par1 holds primary private Key 1 **210** with ID1 **211** that matches the partition ID1 **207** of Pari, but can only use the OTS keys in the allowable range of [0, a-1] **212** for signing operations. It cannot use the OTS keys in the restricted range of [a n-1] reserved for secondary private key **220.** Similarly, partition 1 (Par 1) is currently holding the split off secondary Key 2 **220**, but can only use the OTS keys in the range of [a, n-1] for signing operations. It cannot use the OTS keys in the restricted range of [0, a-1] **222.** However, since the secondary key is associated with ID2 as shown by the partition ID entry (ID2) **221** in the metadata, and because this key does not yet reside in Par 2, the HSM restricts use of the key for signing. The index of the primary private key **210** will be copied from the index of the original key **200**, and the index of the secondary private key **220** will be set to the value of a, the lower index of the range [a, n-1]. In the next step, the HSM clones (140) the secondary key **220** to the secondary partition (Par 2) of memory selected from one among the HSM or an other HSM within the group of HSMs associated with the secondary partition ID **221.** In practice, the OTS keys are pseudo randomly generated using a private seed value. And this seed value would be cloned from one HSM to another. The HSM would restrict which index values and hence which OTS keys are allowed to be generated and used.

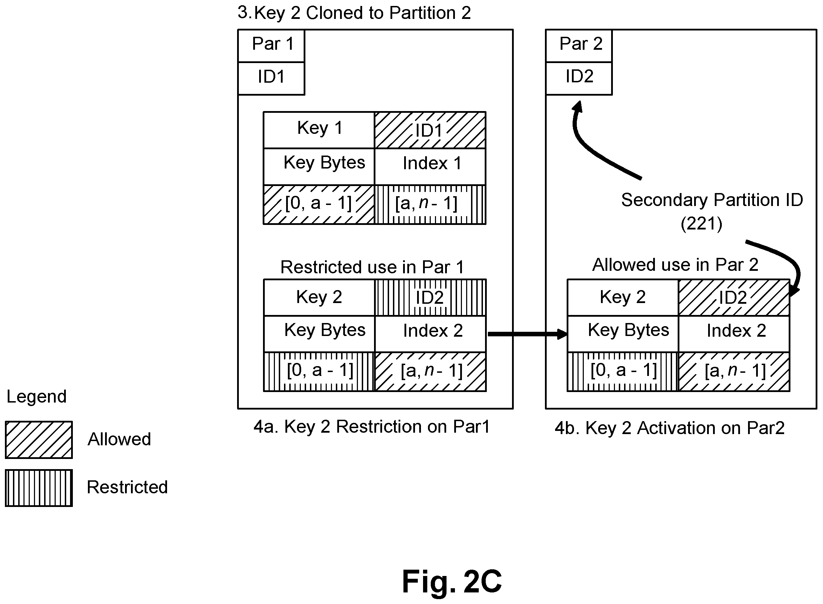

Referring to **FIG. 2C**, a revised depiction of memory partitions for holding stateful private keys associated with this key cloning step is shown. Here, secondary private Key 2 **220** was cloned from Par 1 to Par 2. Thus, private Key 2 **220** exists on both Par 1 and simultaneously Par 2. Use of the OTS keys for Key 2 on Par 1 is unchanged as before in that it has restricted use, but now that Key 2 resides also in Par2, its partition ID entry (ID2) **221** in the metadata matches the ID2 of Partition 2, so it's set of allowable indexes [a, n-1] is activated for use with OTS keys. Accordingly, the HSM can access and use the OTS keys in the allowable index range of [a, n-1] for private Key 2 **220** in Par 2, but cannot access and use the OTS keys in the restricted range of [0, a-1] on Par 2.

At this point secondary Key **220** can be used on partition two (Par 2) since the ID matches and it can use the index is a to n-1. And then the HSM still has primary Key **210** on partition one (Par1) which is able to perform signatures. So, at this point, the HSM is able to sign messages using either HSM partition, across the full set of original allowed indexes **202** split now to key 1 (indexes **212**), and key 2 (indexes **222**). And, if a failure occurs on either partition, all the key material is preserved across the split off (derived) stateful private keys, and the HSM can still sign using the OTS keys.

Notably, the illustrations of FIGS. **2A-2C** show the original set of allowable indexes as 0 to n-1 and use an integer "a" as a delimiter to delineate the range between [0, a-1] and [a, n-1], but in practice, the index range may be set as [i₀, i₁] to show a range with lower and upper indexes. This is also applicable to cases where a key is split and cloned to a target partition, and then the process of key splitting and cloning is repeated again, where the key being split does not have a lower index of zero. This would split off "s" OTS keys into the secondary key. As well, if the key has already been used to sign, the lower index won't be 0 anymore as it will have been incremented. Accordingly, the range [i₀, i₁] is more appropriately used to indicate arbitrary lower and upper indexes. For example, the key split operation with this revised range notation produces a targeted split with allowed indexing in the ranges of [i₀, i₁ - s] for primary indexes **212** selected from a first portion of ranges [i₀, i₁] of the allowed original indexes **202**, and [i₁ - s + 1, i₁] for secondary indexes **213** selected from a second portion of ranges [i₀, i₁] of the allowed original indexes **202**, responsive to receiving an integer "s" parameter as input. In this manner, the key split operation performs a targeted indexing split of the original indexes (202) according to a parameter or algebraic equation, and an integer to determine the number of signatures to split off, provided as input, for producing primary indexes (212) and secondary indexes (213). Although the default index split is linear, and the indexing is an integer increment for the examples shown, other embodiments are contemplated where both the indexing and increment can be a multiplicative factor to support complex pointer manipulations of OTS key objects in fast parallel processing architectures and CPU hardware acceleration designs.

Additional key splitting and cloning of the derivative keys can target HSMs within the group of HSMs. On this point, the methods 110-140 can be recursively applied to generate multiple key splits, and to regenerate keys within the same partition or over multiple partitions across one or more HSMs. For example, the step of performing 130 a key split operation further comprises recursively performing additional key splits on a generated key, and derivative keys thereof, on the HSM or another one of the HSMs, where a partition ID of the generated key is assigned during its generation to match a partition of memory to which it will be cloned on the HSM or another one of the HSMs. This is applicable to a scenario where a key is split and the secondary key is cloned to the target HSM, and that key is yet split again.

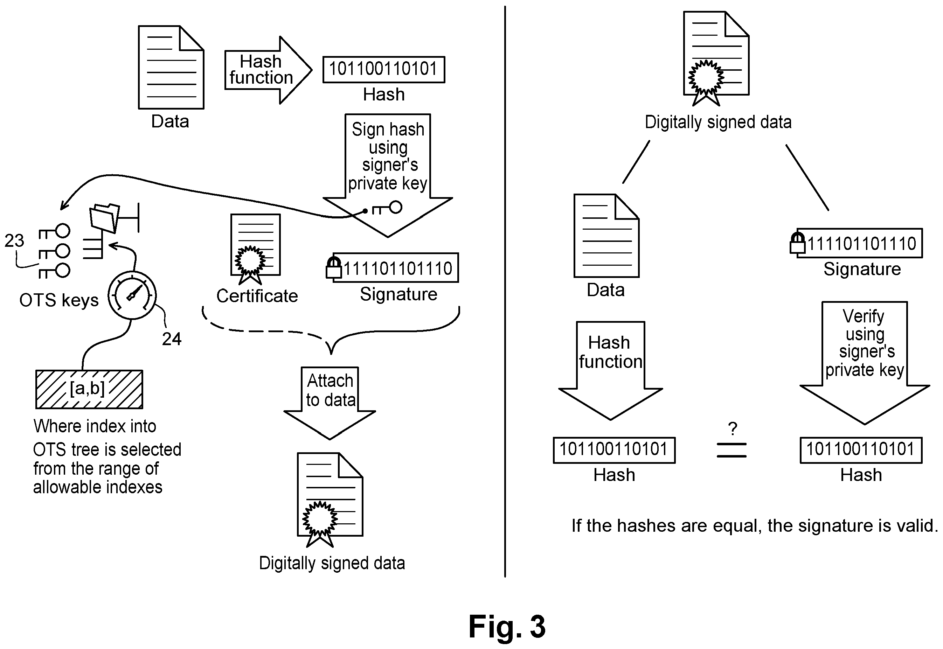

Referring to **FIG 3**, a depiction of a key signing and key verification procedures is shown. The procedures may contain more or less than the number of steps shown. Reference will also be made to the original private key **200** of **FIG. 2A** for describing components such as metadata elements use for these procedures.

Key signing starts with applying a hash function to data, thereby producing a hash (e.g., 101100110101). This hash is then signed using the signer's private key. Here for example, the signing OTS key for Key 1, is identified by metadata: Key Index 1, Key Partition ID1 and range of allowable indexes for Key 1. Similarly, the signing OTS key for Key 2 is identified by metadata: Key Index 2, Key Partition ID2 and range of allowable indexes for Key 2. The key signing process can reference a certificate during the procedure. The OTS key signs the hash (e.g., 101100110101) and then attaches the certificate to the digitally signed data. When the key is used to sign a message, the index needs to be incremented.

The certificate may be stored on the HSM, for example, in a key store, or provided to the HSM, over a communication interface. As an example, a X.509 certificate uses a key pair consisting of a related public key and a private key. The public and private key pair is used to encrypt and decrypt a message, ensuring both the identity of the sender and the security of the message itself. One common use case of X.509-based PKI is Transport Layer Security (TLS)/Secure Socket Layer (SSL), which enables secure HSM communications. The certificate will include customary attributes, for example, subject, serial number, signing algorithm, and other data relevant for use with common cipher suites for securing communication.

The key verification process is essentially the reverse of the key signing procedure. Here, the Digitally signed data, is separated into its respective components: the data and the signature. The Signature is verified using the signer's public key retrieved from the certificate to produce a hash. Separately, the data is processed through the same hash function used for signing, to produce its own hash. These two hashes are compared, and if equal, the signature is valid it proves the signer is authentic, and the data integrity is verified.

Key controlling ensures proper key signing and key verification by mitigating OTS key misuse. It avoids misuse across partitions, and prevents the use of an OTS key from being used more than once to sign a message at the partition level. The HSM selects the OTS key for use from the set of OTS keys **205** based on the partition ID **201**, the range of allowable indexes **202**, and actual index **203** stated in the metadata of the private key 200. These three parameters at a minimum establish the state of the key, for example, for the HSM to inquire and determine if the key has been deleted (or disabled) and re-cloned to a partition. Deleted can mean the file descriptor reference to the key material has been removed, though the key material remains on disc, or that the key material has been erased entirely from memory. Disabled can mean the key remains on the partition with restricted use, for example, as shown in **FIG. 2B** where secondary private key **220** remains in Par 1.

Notably, primary private key **210** and secondary private key **220** can be referenced similarly in practice for key signing and verification. The HSM controls 150 an allowance and restriction of signing operations on the HSM or other HSM for the primary key **210**, the secondary key **220** and derivative keys thereof, in view of partition IDs (ID1, ID2) and indexes (**212**, **213**) embedded within such split keys to retrieve OTS keys, by ensuring that a Key Partition ID **211** matches a partition ID 207 on which a respective key resides; and if so, consuming OTS keys only within a respective allowed index range for the respective key selected from an array of OTS keys in memory, thereby enforcing allowance of a signing use, or otherwise restricting said signing use, whereby improved redundancy protection is provided by way of cloning stateful private keys.

The HSM can perform additional key splits of the primary key (210), secondary key (220) or derivative keys thereof, when their Key Partition ID matches a partition ID of the memory they reside in after said step of cloning. That is it will not allow key splitting unless the partition ID matches the corresponding partition ID in the metadata structure of the private key. This applies to the scenario where a key is split and the secondary key is cloned to the target HSM, and that key is split again. Here, the step of performing (130) a key split operation further comprises recursively performing additional key splits on a generated key, and derivative keys (e.g. primary, secondary, etc.) thereof, on the HSM or another one of the HSMs, where a partition ID of the generated key is assigned during its generation to match a partition of memory to which it will be cloned on the HSM or another one of the HSMs.

The HSM track indexes within such keys of a respective partition for a lifecycle of the respective partition containing the key that was produced from said key split operation. The HSM enforces that each key will only permit use of indexes in a set of allowed indexes, wherein each key contains a unique identifier that associates the allowed indexes to each said key, such that, if a key is deleted and re-cloned to the partition, the HSM uses the key identifier to determine a state of the key, and wherein the state of the key describes a range for the set of allowed indexes, and an actual index the key is presently at.

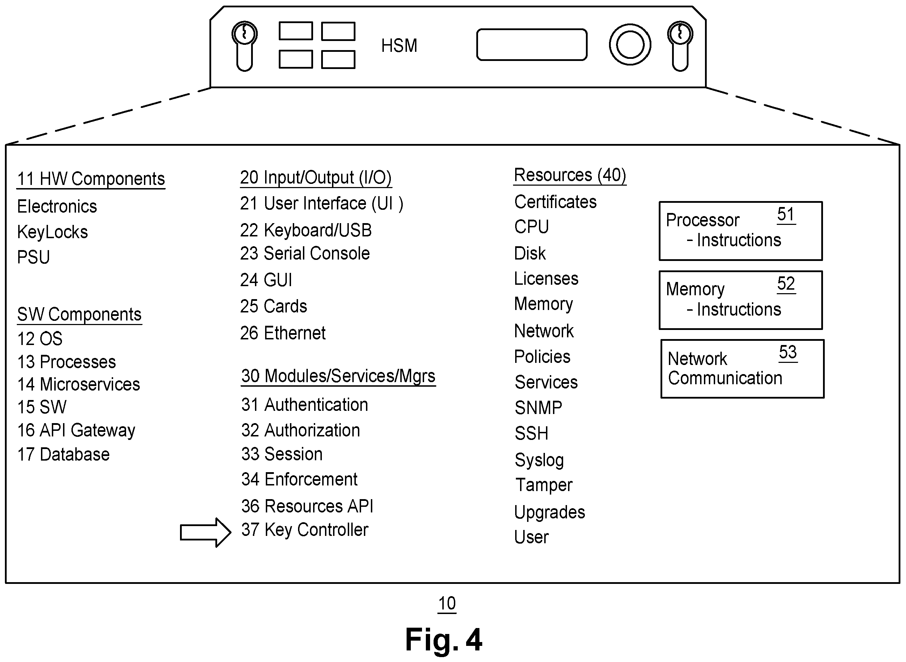

**FIG. 4** depicts exemplary components of the Hardware Server Module (HSM) **10.** The HSM **10** is a physical computing device that, among other capabilities, safeguards and manages digital keys, performs encryption and decryption functions for digital signatures, and provides for strong authentication and other cryptographic functions. As a security hardened unit, the HSM **10** records tamper evidence, such as visible signs of tampering or logging and alerting, and provides for tamper responsiveness such as deleting keys upon tamper detection. The HSM **10** contains one or more secure crypto processor and sensor chips to prevent tampering and bus probing, or a combination of chips in a module that is protected by the tamper evident, tamper resistant, or tamper responsive packaging.

The HSM **10** is in effect a computer system comprising one or more processors **51** and memory **52** coupled to the one or more processors, wherein the memory **52** includes computer instructions which when executed by the one or more processors causes the one or more processors to perform the operations of the methods described herein. The HSM may be connected over the network to other machines via the network communication **53** device interface. In a networked deployment, the machine may operate in the capacity of a server or a client user machine in server-client user network environment, or as a peer machine in a peer-to-peer, or distributed, network environment.

Briefly, the Key Controller **37** uses the one or more processor **51** and memory **52** among other components, wherein the memory includes computer instructions which when executed by the processor causes the processor to perform the operational steps of producing a partition ID **110**, key generation **120**, key splitting **130**, key cloning **140**, key controlling 150 **150** and key signing as shown in **FIG. 1**, and described above in view of **FIGS. 2A-2C** and **FIG. 3** and all interface and support routines. For example, the Key controller **37** ensures that only primary OTS keys within the set of allowed primary indexes **212** associated with primary key **210** and residing in the primary partition (Par1) corresponding to the primary partition ID **211** are allowed for HSM signing operations, and only secondary OTS keys within the set of allowed secondary indexes **222** associated with secondary key **220** and residing in the secondary partition Par2 corresponding to the secondary partition ID **221** are allowed for HSM signing operations.

The Key Controller **37** is configurable for most operating systems (e.g., Linux, Windows) to perform the ID partitioning within the HSM, and across HSMs. It provides common management techniques to partition memory as below:
- Single contiguous allocation: Simplest allocation method. All memory (except some reserved for OS) is available to a process.
- Partitioned allocation: Memory is divided into different blocks or partitions. Each process is allocated according to the requirement.
- Paged memory management: Memory is divided into fixed-sized units called page frames, used in a virtual memory environment.
- Segmented memory management: Memory is divided into different segments (a segment is a logical grouping of the process' data or code). In this management, allocated memory doesn't have to be contiguous.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable memory **52** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

### HSM types

A "general purpose" (GP) HSM is a hardened, tamper-resistant hardware device that strengthen encryption practices by generating keys, encrypting and decrypting data, and creating and verifying digital signatures. GP HSMs may be assembled in clusters and act as a single hardware Root of Trust. It is a critical component of public key infrastructures (PKIs) to generate and protect root and certificate authority keys; code signing to ensure software remains secure, unaltered and authentic; and creating digital certificates for credentialing and authenticating proprietary electronic devices for Internet of Things (IoT) applications and other network deployments. A General Purpose HSM is flexible and can be used in any application that uses cryptographic keys which does not require the additional security controls and regulations imposed by a Payment HSM. Examples include management of the symmetric keys used for database encryption, and management and use of the asymmetric keys used for the creation of digital signatures and certificates to support PKI (Public Key Infrastructure) and crypto wallets.

A "payment" HSM is a hardened, tamper-resistant hardware device that is used primarily by the retail finance or banking industry to provide high levels of protection for cryptographic keys and customer PINs used during the issuance of magnetic stripe and EMV chip cards (and their mobile application equivalents) and the subsequent processing of credit and debit card payment transactions. Payment HSMs normally provide native cryptographic support for all the major card scheme payment applications and undergo rigorous independent hardware certification. Payment HSMs and management tools provide flexible, efficient transaction security for retail payment processing environments, internet payment applications, and web-based PIN delivery.

An HSM "Appliance" is a physical computing system that, like other HSMs, among other capabilities, safeguards and manages digital keys, performs encryption and decryption functions for digital signatures, and provides for strong authentication and other cryptographic functions. As a security hardened unit, an HSM Appliance records tamper evidence, such as visible signs of tampering or logging and alerting, and provides for tamper responsiveness such as deleting keys upon tamper detection. An HSM Appliance has added capabilities to connect to an IP network, asynchronously generate events, run a web server, and any other processes that can run on a general purpose motherboard.

The acronym "IP" designates any protocol of the Internet protocol suite for operation of network applications, such as, for instance: i) in the Application layer of the OSI model: the Hypertext Transfer Protocol (HTTP) or its secure version HTTPS, DHCP, SMTP, TLS/SSL, etc., ii) in the Transport layer of the OSI model which can be used to transmit data over the Internet or any Local Area Network (LAN) : the Transmission Control Protocol (TCP), the User Datagram Protocol (UDP) needing only one port for full-duplex, bidirectional traffic, the Stream Control Transmission Protocol (SCTP) and the Datagram Congestion Control Protocol (DCCP) which also use port numbers that match the services of the corresponding TCP or UDP implementation, if they exist; and iii), in the Internet (Network) layer: Internet Protocol (IPv4 or IPv6), ICMP, IGMP, etc.

In some embodiments an HSM Appliance includes therein a PCIe card as an independent tamper protected module with its own security scope and certification. The HSM Appliance may be designed or configured as either, or both, a general purpose HSM or a payments HSM. A "cloud HSM" provides same functionality as HSM Appliances with the benefits of a cloud service deployment, without the need to host and maintain on premises appliances. A HSM deployment can provide for Software as a Service (SaaS), Platform as a Service (PaaS), or Infrastructure as a Service (laaS) models.

The main role of a payment HSM is to protect cryptographic keys and other security sensitive data in a highly secure manner, such that the integrity of the overall payment process is maintained, and provide audit and system logs of HSM usage. To that end, HSMs offer the highest level of security by always storing cryptographic keys in intrusion-resistant hardware and providing up to date reporting of its operation. Commonly, HSMs are housed in a data center of a computing resource provider or any similar securely hosting area. More specifically, any HSM hosted in the data center may be attached directly to a server, for instance in a rack, and can be accessed on-site by an operator e.g., through console attach to the HSM via a universal serial bus (USB) connection implementing a USB-C interface, for example.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A secure method (100) for improved redundancy protection by way of cloning stateful private keys suitable for use against quantum computer attacks directed to a Hardware Security Module (HSM) amongst a group of HSMs employing stateful Hash-Based Signature Schemes (HBSS), the method comprising the steps of:
generating (110) a unique partition ID for each partition of memory within the HSM for the group of HSMs;
generating (120) an original private key (200) and assigning to it:
i) an original partition ID (201) corresponding to an original partition (Par1) of the memory associated with the unique partition ID (207) on which the original private key (200) is generated, and
ii) a set of allowed original indexes (202) for accessing One-Time Signature (OTS) keys corresponding to a state of the original private key (200);
performing (130) a key split operation on the original private key (200) using a Target Partition ID as input to the operation, thereby producing and assigning:
a primary key (210) specific to a primary partition ID (211) corresponding to the original partition ID (201), with its revised set of allowed primary indexes (212) for OTS keys selected from the set of allowed original indexes (202); and
a secondary key (220) specific to a secondary partition ID (221) corresponding to the Target Partition ID, the secondary key (220) with its targeted set of allowed secondary indexes (222) for OTS keys selected from the set of allowed original indexes (202),
wherein the original private key is split only if its original partition ID (201) matches the original partition (Par1) of the memory on which it was generated; and
cloning (140) the secondary key (220) to a secondary partition (Par2) of memory selected from one among the HSM or another HSM within the group of HSMs associated with the secondary partition ID (221); and
controlling (150) an allowance and restriction of signing operations on the HSM or other HSM for the primary key (210), the secondary key (220) and derivative keys thereof, in view of partition IDs and indexes embedded within such split keys to retrieve OTS keys, by:
ensuring that a Key Partition ID matches a partition ID on which a respective key resides; and if so,
consuming OTS keys only within a respective allowed index range for the respective key selected from an array of OTS keys in memory,
thereby enforcing allowance of a signing use, or otherwise restricting said signing use,
whereby improved redundancy protection is provided by way of cloning stateful private keys.

2. The method of claim 1, further comprising: performing additional key splits of the primary key (210), secondary key (220) or derivative keys thereof, only when their Key Partition ID matches a partition ID of the memory they reside in after said step of cloning; and
tracking indexes within such keys of a respective partition for a lifecycle of the respective partition containing key produced from said key split operation.

3. The method of claim 1, wherein the key split operation performs a targeted indexing split of the original indexes (202) according to a parameter or algebraic equation, and an integer to determine the number of signatures to split off, provided as input, for producing primary indexes (212) and secondary indexes (213).

4. The method of claim 3, wherein the key split operation produces a targeted split with allowed indexing in the ranges of:
[i₀, i₁ - s] for primary indexes (212) selected from a first portion of ranges [i₀, i₁] of the allowed original indexes (202), and
[i₁ - s + 1, i₁] for secondary indexes (213) selected from a second portion of ranges [i₀, i₁] of the allowed original indexes (202),
responsive to receiving an integer "s" parameter as input.

5. The method of claim 1, wherein
only primary OTS keys within the set of allowed primary indexes (212) associated with primary key (210) and residing in the primary partition (Par1) corresponding to the primary partition ID (211) are allowed for HSM signing operations, and
only secondary OTS keys within the set of allowed secondary indexes (222) associated with secondary key (220) and residing in the secondary partition (Par2) corresponding to the secondary partition ID (221) are allowed for HSM signing operations.

6. The method of claim 1, wherein the step of performing (130) a key split operation further comprises recursively performing additional key splits on a generated key, and derivative keys thereof, on the HSM or another one of the HSMs, where a partition ID of the generated key is assigned during its generation to match a partition of memory to which it will be cloned on the HSM or another one of the HSMs.

7. The method of claim 1, further comprising tracking indexes of keys used in a partition for a lifecycle of the partition, where the HSM enforces that each key will only permit use of indexes in a set of allowed indexes,
wherein each key contains a unique identifier that associates the allowed indexes to each said key, such that, if a key is deleted and re-cloned to the partition, the HSM uses the key identifier to determine a state of the key,
wherein the state of the key describes a range for the set of allowed indexes, and an actual index they key is presently at.

8. The method of claim 1, wherein the HBSS is one of an eXtended Merkle Signature Scheme (XMSS) and a Leighton-Micali Signatures (LMS) scheme.

9. A Hardware Security Module (HSM) employing stateful Hash-Based Signature Schemes (HBSS) with improved redundancy protection against quantum computer attacks, the HSM comprising:
one or more processors and memory coupled to the one or more processors, wherein the memory includes one or more partitions and computer instructions which when executed by the one or more processors causes the one or more processors to perform the operations of:
generating (110) a unique partition ID for each partition of memory within the HSM for the group of HSMs;
generating (120) an original private key (200) and assigning to it:
i) an original partition ID (201) corresponding to an original partition (Par1) of the memory associated with the unique partition ID (207) on which the original private key (200) is generated, and
ii) a set of allowed original indexes (202) for accessing One-Time Signature (OTS) keys corresponding to a state of the original private key (200);
performing (130) a key split operation on the original private key (200) using a Target Partition ID as input to the operation, thereby producing and assigning:
a primary key (210) specific to a primary partition ID (211) corresponding to the original partition ID (201), with its revised set of allowed primary indexes (212) for OTS keys selected from the set of allowed original indexes (202); and
a secondary key (220) specific to a secondary partition ID (221) corresponding to the Target Partition ID, the secondary key (220) with its targeted set of allowed secondary indexes (222) for OTS keys selected from the set of allowed original indexes (202),
wherein the original private key is split only if its original partition ID (201) matches the original partition (Par1) of the memory on which it was generated; and
cloning (140) the secondary key (220) to a secondary partition (Par2) of memory selected from one among the HSM or an other HSM within the group of HSMs associated with the secondary partition ID (221); and
controlling (150) an allowance and restriction of signing operations on the HSM or other HSM for the primary key (210), the secondary key (220) and derivative keys thereof, in view of partition IDs and indexes embedded within such split keys to retrieve OTS keys, by:
ensuring that a Key Partition ID matches a partition ID on which a respective key resides; and if so,
consuming OTS keys only within a respective allowed index range for the respective key selected from an array of OTS keys in memory,
thereby enforcing allowance of a signing use, or otherwise restricting said signing use,
whereby improved redundancy protection is provided by way of cloning stateful private keys.

10. The HSM of claim 9, wherein the one or more processors partition (110) memory into one or more partitions, and assigning an original partition ID (207) to the one or more partitions.

11. The HSM of claim 10, wherein the one or more processors generate (120) an original private key (200) with a metadata structure comprising entries for: a key name, key partition ID (201), key bytes, index (203) of a current OTS key, and a set of allowed indexes (202) and storing the entries within the one or more partitions.

12. The HSM of claim 11, wherein the one or more processors split the original private key (200) using a Target Partition ID as input and an integer number of derivative keys to generate and split off from the original private key.

13. The HSM of claim 12, wherein the one or more processors recursively perform additional key splitting and the cloning of the derivative keys to target HSMs within the group of HSMs, and
wherein the one or more processors perform a targeted indexing split of the original indexes (202) according to a parameter or algebraic equation, and an integer to determine the number of signatures to split off, provided as input, for producing primary indexes (212) and secondary indexes (213).

14. The HSM of claim 13, wherein the one or more processors track indexes of keys used in a partition for a lifecycle of the partition, where the HSM enforces that each key will only permit use of indexes in a set of allowed indexes,
wherein each key contains a unique identifier that associates the allowed indexes to each said key, such that, if a key is deleted and re-cloned to the partition, the HSM uses the key identifier to determine a state of the key,
wherein the state of the key describes a range for the set of allowed indexes, and an actual index they key is presently at.

15. The HSM of claim 10, wherein said step of controlling (150) an allowance and restriction of signing operations ensures that a given index or OTS key will only ever be used once to sign a message, in addition to never using an index or OTS key outside of its allowed range
